# EUROPEAN PATENT SPECIFICATION

(11) **EP 0 806 316 B1**
(45) Date of publication and mention of the grant of the patent: **18.02.2004**
(21) Application number: 96303259.4
(22) Date of filing: 09.05.1996
(51) Int. Cl.: B60K 6/04

(54) **Combined power distribution system using a differential**
Verteilungssystem für kombinierte Leistung unter Verwendung eines Differentials
Système de distribution d'une puissance combinée utilisant un différentiel

(43) Date of publication of application: 12.11.1997
(73) Proprietor: Yang, Tai-Her, Si-Hu Town, Dzan-Hwa (TW)
(72) Inventor: Yang, Tai-Her, Si-Hu Town, Dzan-Hwa (TW)
(74) Representative: Wright, Howard Hugh Burnby

(56) References cited:
- GB-A- 2 275 309
- US-A- 5 433 282
- US-A- 5 492 189

## Description

The distributed differential mixing combined power system is used in driving the traffic machinery such as vehicles, ships, flying machines or other mechanical structures (or other industrial or process equipment) in rotational driving applications.

A combined power distribution system with the features of the preamble of claim 1 is known from GB 2275309 which discloses a power generating system used to drive vehicles or the like which comprises an internal combustion engine, turbine, or other power source connected through differential gearing or the like to a motor/generator unit. Control devices are included to control the supply of power of between the motor/generator unit and a battery. A brake is also provided. Various embodiments are described including systems having front and rear loads.

According to the present invention, a combined power distribution system for use in rotational driving applications comprises a rotational power source having a rotational output shaft, a front load with which the rotational output shaft is coupled via a clutch, a rear load having two sides and a differential therebetween, a mixing differential including an electrical machine having a rotor and a stator, a differential gear transmission system to which the rear load, the front load and the electrical machine are drivingly connected and a brake disposed between the rotor and the stator of the electrical machine and means for controlling the brake, the electrical machine being operable to generate different motor driving functions when an input current is applied and the electric machine is employed as a motor, and to generate different generator functions through an output current when the electric machine is employed as a generator, the electric machine also being used as a power regeneration brake when the rotational power source is the main power source for the front and rear loads, the electric machine being connected to charge a battery at which time a speed difference with the rear load can be adjusted by controlling the charging current, wherein the output power of the rotational power source is directed to the mixing differential and can be driven at a constant speed and at a partially adjustable speed to improve the operating efficiency and decrease pollution, wherein one part of the output power being transformed through the mixing differential is used for driving the rear load while the remainder of the output power is converted through the generator function of the electrical machine of the mixing differential to charge the battery, characterised in that the mixing differential is disposed in the system separately from the rear load differential between the front and the rear loads.

The rotational power source can operate at a constant speed or at various adjustable speeds in order to operate at the right speed for higher operating efficiency in low pollution. One part of the power passing through the differential is used for driving the load, while the rest is converted through the electric machine to charge the battery, thereby promoting engine efficiency in the variable speed driving mode at low driving speed, reducing pollution and providing a variable speed coupling. The electric machine can also be used to generate rotational output to drive the load independently from or together with the rotational power source.

Other advantageous features are claimed in the dependent claims.
Figure 1 is a embodying example of the invention
Figure 2 is the first application system of Figure 1
Figure 3 is the second application system of Figure 1
Figure 4 is the third application system of Figure 1
Figure 5 is the fourth application system of Figure 1
Figure 6 is the fifth application system of Figure 1
Figure 7 is the sixth application system of Figure 1
Figure 8 is the seventh application system of Figure 1

### DETAILED DESCRIPTION OF THE INVENTION

In recent years, the energy and noise pollution issues are becoming more and more serious, and a better solution to alleviate the problems is to use the electrical power driven carriers. However, the R&D of the electrical power driven carriers up to now is limited by the capacity of the batteries to achieve a larger moving range, while to increase the battery volume or the quantities will correspondingly increase the self-weight of the carrier resulting in consuming more electrical energy and does not meet the economic requirements. Therefore, before there us a big breakthrough in solving the battery technical problems, the more practical driving method is to use the combined driving structure designs, wherein the developed ones include:
(A)Series Combined Power design : This design is the most typical structure for the electrical driven vehicle, wherein the generator is driven by the engine to generate electricity and charge the battery, then the battery provides electricity to the driven motor to drive the vehicle. As the energy is converted several times, the overall efficiency of this design is low, such as the GM HX3 of General Motors.
(B)Synchronized Power on common shaft design: It is by directly series combining the engine power output shaft and the rotating shaft of the driven motor, thereby to generate driving and speed controlling functions, such as the West Germany sedan VW CHICO

For the case of the engine or the motor described in (B), only one of them can be selected for output transmission and the combination of their power output is not available.

The disclosed distributed differential mixing combined power system of the invention is characterized that the output power from the output shaft of the engine (or other rotational power source) is not only used to drive the front section load, but is also combined with a differential mixing drive device to drive the rear section load, wherein the electrical machine of the said differential mixing drive device is constituted by an AC or DC, brushed or brushless electric machine combined with the three-end shaft differential wheels transmission system which is embodied in a three-end shaft differential gears structure, wherein the two differential output shaft and a input shaft are coupled with the electrical device through a transmission gear, while the two wheel shafts of the differential gears are respectively coupled with the transmission middle shaft drived by the drive side rotational power unit and are coupled with the input shaft of the rear differential gear box through a clutch to drive the two side differential acting rear section load; wherein the above said three-end shaft differential gears system can be substituted by a planetary gear train and the transmission gear can be substituted by a friction wheel; further, a brake is installed between the rotor and the stator of the electrical machine and the said brake is controlled by the operating device to generate motor functions when the input current is applied or to generate the generator output functions pulled by the external force. This design can add up the power and speed of the engine output to the rear load section and the output generated by the electrical machine itself while the adding process is not affected by the speed relationship between the two; and in general, it has a smaller system volume and saves the cost and space. The said electrical machine can be controlled by the operating device to generate motor driving functions when the input current is applied to drive the front section load or the rear section load, or to drive them simultaneously, or to start the engine, or to provide the generator output due to the rotation speed difference between the engine rotational power input and the driven load and to provide the differential adjusting function for the controllable speed change through the coupling torque generated by the output current, or to be used as the power regeneration brake which is particularly for case when the engine is the main transmission power source to charge the battery through the speed difference between the two differential shafts of the three-end shaft differential gears system in the differential mixing drive device structure, wherein the speed difference with the rear load section can be adjusted by controlling the charging current. The said engine can be at a constant speed or at a partially adjustable speed thereby to maintain at a working speed of higher operating efficiency and lower pollution and one part of the differential speed output power generated through the differential mixing drive device is used for driving the load while the rest part of the power is converted through the generator function of the electromagnetic coupling device to charge the battery, thereby to promote the engine efficiency in the variable speed driving at the low driving speed range, to acquire the charging power to the battery while reducing the pollution, and to provide the variable speed coupling. Besides, it can also be used as a driving motor to generate rotational output to drive the load independently or to drive the load with the engine together.

The invention is illustrated according to the embodying examples shown in the enclosed drawings as follows :

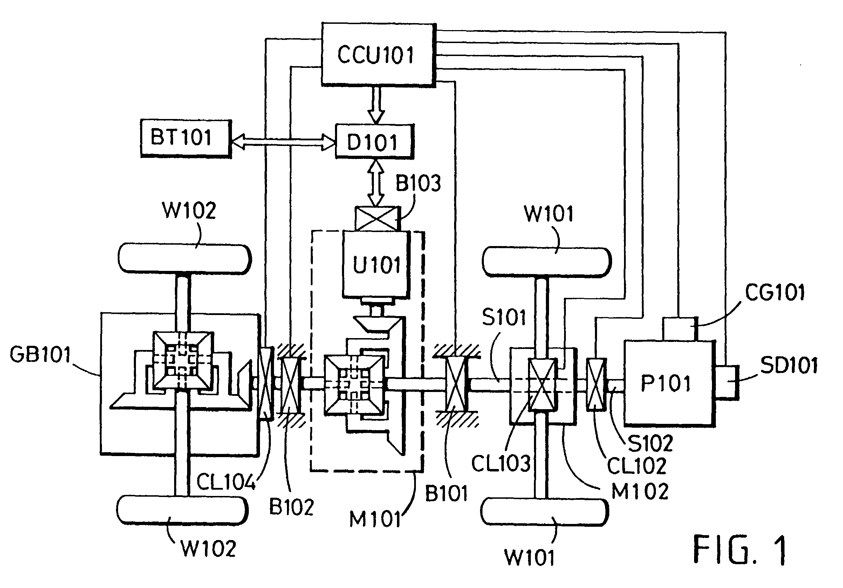

Figure 1 is the embodying example of the distributed differential mixing combined power system, which is characterized in :
   - A drive side rotational power source P101, wherein its output is first supplied to control the front section load and is then transmitted to the input end of the differential mixing drive device M101 to drive the rear section load.
   - A differential mixing drive device M101, wherein the transmission methods of its output end and its rear end include the direct transmission to another load (or through a transmission component to another load), or transmission to the differential acting load through the rear differential wheels train (such as the vehicle side rear wheels),and it is mainly comprised of the following:
      - A drive side rotational power unit P101: It is an internal engine or other power source, wherein the rotational output shaft S102 is coupled to the middle transmission device and the control interface M102 through the clutch CL102, and the said internal engine is further installed with a speed sensor SD101 to transmit the engine rotation signal to the central controller CCU101, wherein the controllable fuel valve CG101 is controlled by the said central controller CCU101 to change the engine speed or to keep the engine maintained at a constant speed;
      - A middle transmission device and a control interface M102 which is comprised of the automatic or manual speed change control system in the conventional front wheel drived system to drive the front section load only or to drive the whole loads: the clutch CL103 is installed between the middle input shaft S101 and the front section load to provide the transmission coupling or to cut off the transmission relationship between the middle transmission device and the front wheels, and the said clutch CL103 can also be substituted by the neutral shift or co-installed with the neutral shift when the shift interface is at the neutral shift status. The said middle shaft S101 is coupled at the output end of the clutch CL102 is either directly rear extended or through a transmission device to render the rotation speeds between the middle shaft S101 and the output presented in a constant speed ratio or a non-constant speed ratio (it is similar to the rear extended rear wheel transmission shaft in the four wheel drive), A brake B101 controlled by the central controller CCU101 is further installed between the middle shaft S101 and the fixed casing;
      - A direct driven front section load W101: It is comprised of one or more than one driven wheels with driven resistance of the load;
      - A differential mixing drive device M101: It is comprised of an electric machine U101 combined with the three-end shaft differential wheels transmission system which is embodied in a three-end shaft differential gears structure, wherein the two differential output shaft and a input shaft are coupled with the electrical device U101 through a transmission gear, while the two wheel shafts of the differential gears are respectively coupled with the transmission middle shaft S101 drived by the drive side rotational power unit and are coupled with the input shaft of the rear differential gear box GB101 through a clutch CL104 to drive the two side differential acting rear section load W102; wherein the above said three-end shaft differential gears system can be substituted by a planetary gear train and the transmission gear can be substituted by a friction wheel;
      - An electrical machine U101: Wherein between its rotor and its stator, a brake B103 is installed to be controlled by the central controller CCU101 to make a direct mechanical synchronous interlock on the rotor and stator of the electrical machine U101, wherein the above said electrical machine U101 is comprised of an AC or DC, brushed or brushless electrical machine structure, and is particularly suitable to be constituted by a series excited or auxiliary compound excited electrical machine with the electrical characteristic of rotational speed increased corresponding to the decreasing load, or an AC or DC brush or brushless machine able to perform current control (including constant current control) through the operating control of the drive circuit D101 to help provide the additional torque on the driven load;
      - A drive circuit device D101 which is installed between the electrical machine U101 and the battery BT101, wherein it receives the operating commands from the central controller CCU101 to control the electrical machine U101 functioned as a generator to charge the battery or supply power to the other load or to provide a current controllable generation output;
      - A central controller CCU101 which follows the commands from the operator and the operating status of the drive side rotational power unit P101 to generate the corresponding control commands to the drive circuit device D101;
      - A brake B102 can be installed as needed between the casing and the jointing side of the clutch CL104 which is located between the differential acting output shaft of the differential mixing drive device M101 and the coupled rear differential gear box, thereby to drive the front section load or to start the engine, or to provide power generation at standstill, wherein the electrical machine U101 is driven by the engine to function as a generator to charge the battery or supply power to the other loads. For the case of AC power generation output functions, the said U101 is selected to employee the electrical machine with AC power generating functions comprised of a permanent magnet or winding excited, varied frequency driven field type electrical device, or a brushed alternator type electrical device, wherein its armature winding is commonly installed the conducting rings for AC output and the commutators for DC input/output, whereby the AC output can be a varied frequency output or a constant frequency output through the engine constant speed control;
      - The afore said direct driven load and the distributed differential load are comprised of one or more than one rotational power sources, or one or more than one direct driven load, or one or more than one differential mixing drive device M101 and its driven load groups in sequential series combinations of an enlarged type compound series combined structure.

Functions of the embodying example shown in Figure 1 as is delineated in Table 1 as follows :
**F1-A F1-B F1-C F1-D:** They are the various system operations when the engine drives the load at low speed output;
**F2** and **F3**: They are the system operations when the electrical machine U101 is powered by the battery to drive the load as a motor;
**F4-A** and **F4-B**: They are the system operations when the electrical machine U101 is powered by the battery to be operated as a motor and is driving the load with the engine together, thereby to have large power output through the output power addition;
**F5, F6** and **F7**: They are the system operations when the electrical machine U101 is operated as a generator driven by the feedback mechanical energy of the load to charge the battery or to function as a brake by utilizing the friction damping of the engine itself;
**F8:** It is the system operation when the electrical machine U101 is driven by the engine to operated as a generator to charge the battery: This function can be further included with a charging timing control to stop automatically at a preset time. For the case of AC power generation output functions, the said U101 is selected to employee the electrical machine with AC power generating functions comprised of a permanent magnet or winding excited, varied frequency driven field type electrical device, or a brushed alternator type electrical device, wherein its armature winding is commonly installed the conducting rings for AC output and the commutators for DC input/output, whereby the AC output can be a varied frequency output or a constant frequency output through the engine constant speed control;
**F9 :** The electrical machine U101 is operated as a motor and is powered by the battery to start the engine;
**F10:** The neutral sliding is that all the system clutches and brakes are at "OFF" state to provide low loss sliding operation;

The above system operating functions are described as follows:
**F1-A:** The engine fuel valve is controlled to drive the engine from low speed to high speed which is comprised of the following:
   - The internal engine is the drive side rotational power source which is controlled by the engine fuel valve to drive the rear section load, wherein the clutches CL102 and CL104 are at ON state while the CL103 is at OFF state and the brakes B101 and B102 are at OFF state while the B103 is at the ON state.
   - The internal engine is the drive side rotational power source which is controlled by the engine fuel valve to drive the front and rear section loads, wherein the clutches CL102, CL103 and CL104 are all at ON state and the brakes B101 and B102 are at OFF state, while the brake B103 is at the ON state;
   - The internal engine is the drive side rotational power source which is controlled by the engine fuel valve to drive the front section load, wherein the clutches CL102 and CL103 are at ON state while the CL104 are at OFF state and the brakes B101, B102, B103 are all at the OFF state;
**F1-B:** The engine fuel vale and the electrical machine U101 is controlled simultaneously to drive the engine from low speed to high speed and to charge the battery simultaneously, which is comprised of the following:
   - The internal engine is the drive side rotational power source which is controlled by the engine fuel valve on the engine speed change and to operate the electrical machine U101 as a generator to charge the battery and to drive the rear section load, wherein the clutch CL103 is at OFF state while the CL102 and CL104 are at ON state and the brakes B101, B102 and B103 are all at OFF state;
   - The internal engine is the drive side rotational power source which is controlled by the engine fuel valve on the engine speed change and to operate the electrical machine U101 as a generator to charge the battery and to drive the front and rear section loads together with the engine, wherein the clutches CL102, CL103 and CL104 are at ON state and the brakes B101, B102 and B103 are all at OFF state;
   - The internal engine is the drive side rotational power source which is controlled by the engine fuel valve on the engine speed change and to drive the front section load as well as to operate the electrical machine U101 as a generator to charge the battery at the same time, wherein the clutch CL104 is at OFF state while the CL102 and CL103 are at ON state; Further, the brakes B101 and B103 are OFF while the B102 is at ON state;
**F1-C:** The engine is speed controlled or operated at a constant speed, wherein the battery charging current from the electrical machine U101 is controlled to change the output power to the load and it is comprised of the following:
   - The internal engine is the drive side rotational power source, wherein the engine is controled by the engine fuel valve and the speed feedback signal to operate at constant speed as well as to operate the electrical machine U101 to charge the battery, thereby to adjust the coupling torque to drive the rear section load, wherein the clutches CL103 is at OFF state while the CL102 and CL104 are at ON state and the brakes B101, B102 and B103 are at OFF state;
   - The internal engine is the drive side rotational power source, wherein the engine speed is controlled by the engine fuel valve and the speed feedback signal to drive the front section load as well as to operate the electrical machine U101 to charge the battery, thereby to adjust the coupling torque to drive the rear section load, wherein the clutches the CL102, CL103 and CL104 are at ON state and the brakes B101, B102 and B103 are at OFF state;
**F1-D:** The electrical machine U101 generates short cut current to control the output shaft torque, thereby to change the engine speed and is comprised of the following:
   - The internal engine is the drive side rotational power source, wherein the engine fuel valve and the speed feedback signal are utilized to control the engine speed and simultaneously to operate the electrical machine U101 as a generator and control on the generated short cut circuit current to change its coupled torque, thereby to change the transmission power to the front and rear section loads, wherein the clutch CL103 is at OFF state, while the CL102 and CL104 are at ON state and the brakes B101, B102 and B103 are at OFF state;
   - The internal engine is the drive side rotational power source, wherein the engine fuel valve and the speed feedback signal are utilized to control the engine speed and simultaneously to operate the electrical machine U101 as a generator and control on the generated short cut circuit current to change its coupled torque, thereby to change the transmission power to the front and rear section loads, wherein the CL102, CL103 and CL104 are at ON state and the brakes B101 and B102 are at OFF state;
**F2:** The electrical machine U101 is powered by the battery to change the speed or the rotation direction of the rear section load, which is comprised of the following:
   - The electrical machine U101 is powered by the battery to drive the rear section load: At this time, the said electrical machine U101 is operated as a motor and the brake 101 is at ON state while the brake B102 and B103 are at OFF state. The clutch CL102 and the clutch CL103 for controlling the front section load are at OFF state, and the CL104 is at ON state;
**F3:** The electrical machine U101 is powered by the battery to change the speed or the rotation direction of the front section load, which is comprised of the following:
   - The electrical machine U101 is powered by the battery to drive the front section load: At this time, the electrical machine U101 is operated as a motor while the brake B102 is at the ON state and the B101 and B103 are at OFF state, the clutches CL102 and CL104 are at OFF state, and the CL103 is at ON state;
**F4-A:** The engine is operated at a preset speed while the electrical machine U101 is operated as a motor to provide added power output to drive the rear section load, which is comprised of the following:
   - The internal engine is the drive side rotational power source, wherein the engine is operated at a varied or constant speed and the electrical machine U101 is powered by the battery at the same time, thereby to provide the added power output to drive the rear section load simultaneously. At this time, the clutch CL103 is at OFF state while the CL102 and CL104 are at ON state and the brakes B101, B102 and B103 are all at OFF state;
**F4-B:** The engine is operated at a preset speed while the electrical machine U101 is operated as a motor to provide added power output to drive the front and rear section loads, which is comprised of the following:
   - The internal engine is the drive side rotational power source, wherein the engine is operated at a varied or constant speed and the electrical machine U101 is powered by the battery at the same time, thereby to provide the added power. output to drive the front and rear section loads simultaneously. At this time, the CL102, CL103 and CL104 are at ON state and the brakes B101, B102 and B103 are at OFF state;
**F5:** The electrical machine U101 is operated as a generator to charge the battery using the recovered rear section kinetic energy, which, is comprised of the following:
   - The engine speed is reduced or the fuel valve is closed and the electrical machine U101 is operated as a generator to covert the rotational mechanical energy of the rear section load into the electric power to charge the battery, or to consume the electric power by the other loads, thereby to obtain the friction damping and together with the engine piston friction damping to constitute the braking friction damping, wherein the brakes B101, B102 and B103 are at OFF state, the clutch CL103 is at OFF state, the CL102 and CL104 are at ON state, and the engine can be stopped or slowly operated;
   - The electrical machine U101 is operated as a generator to covert the rotational mechanical energy of the rear section load into the electric power to charge the battery, or to consume the electric power by the other loads, thereby to obtain the friction damping, wherein the brake B101 is at ON state while the B102 and B103 are at OFF state, and the clutches CL102 and CL103 are at OFF state, and the engine can be stopped or operated at a slower speed than the sliding speed, and when the CL104 is at ON state, the engine can be at operating or stop;
**F6:** The electrical machine U101 is operated as a generator to charge the battery using the recovered front section kinetic energy, which is comprised of the following:
   - The engine speed is reduced or the fuel valve is closed and the electrical machine U101 is operated as a generator to covert the rotational mechanical energy of the front section load into the electric power to charge the battery, or to consume the electric power by the other loads, thereby to obtain the friction damping and together with the engine piston friction damping to constitute the braking friction damping, wherein the brakes B101 and B103 are at OFF state, while the B102 is at ON state, and the clutch CL104 is at OFF state, while the CL102 and CL103 are at ON state, and the engine can be stopped or slowly operated;
   - The electrical machine U101 is operated as a generator to covert the rotational mechanical energy of the front section load into the electric power to charge the battery, or to consume the electric power by the other loads, thereby to obtain the friction damping, wherein the brake B102 is at ON state, and the B101 and B103 are at OFF state, the clutches CL102 and CL104 are at OFF state, while the CL103 is at ON state and the engine can be stopped or operated at a slower speed than the sliding speed, and when the CL102 is at OFF state, the engine can be at operating state or stopped;
**F7:** All the loads are braked by the engine friction damping, which is comprised of the following:
   - The engine speed is reduced or the fuel valve is closed and the generator is operated to covert the rotational mechanical energy of the front and rear section loads into the friction damping and together with the engine piston friction damping to constitute the braking friction damping, wherein the brake B101, B102 and B103 are at OFF state, the clutches the CL102, CL103 and CL104 are at ON state, and the engine can be stopped or slowly operated;
**F8:** The system is self charged, which is comprised of the following:
   - The electrical machine U101 is drived by the drive side rotational power source to be operated as a generator to charge the battery or supply power to the other loads. At this time when the engine is started, the brakes B101 and B103 are at OFF state, while the B102 is at ON state, and the clutches CL103 and CL104 are at OFF state, while the CL102 is at ON state; and the timer can be further utilized to preset the engine charging time or control the charging capacity for automatic stop. For the case of AC power output function, the said U101 is selected to employee the electrical machine with AC power generating functions comprised of a permanent magnet or winding excited, varied frequency driven field type electrical device, or a brushed alternator type electrical device, wherein its armature winding is commonly installed the conducting rings for AC output and the commutators for DC input/output, wherein the AC output can be provided at a varied frequency or a constant frequency through the engine constant speed control;
**F9:** The electrical machine U101 is operated as a motor to start the engine, which is comprised of the following:
   - The electrical machine U101 is used to start the drive side engine: At this time, the brake B102 is at ON state, while the B101 and B103 is at OFF state, and the front section operating interface M102 and the front section coupled clutches CL103 and CL104 are at OFF state, while the Clutch CL102 is at ON state;
**F10:** Neutral slide: It is the slide function of the system when no power output and brake are activated, which is comprised of the following:
   - The engine can be at operating state or stopped, the brake B101, B102 and B103 are at OFF state, the clutches CL102, CL103 and CL104 are all at OFF state.

The embodying example of the distributed differential mixing combined power system in Figure 1 are comprised of the following variations in the practical applications:

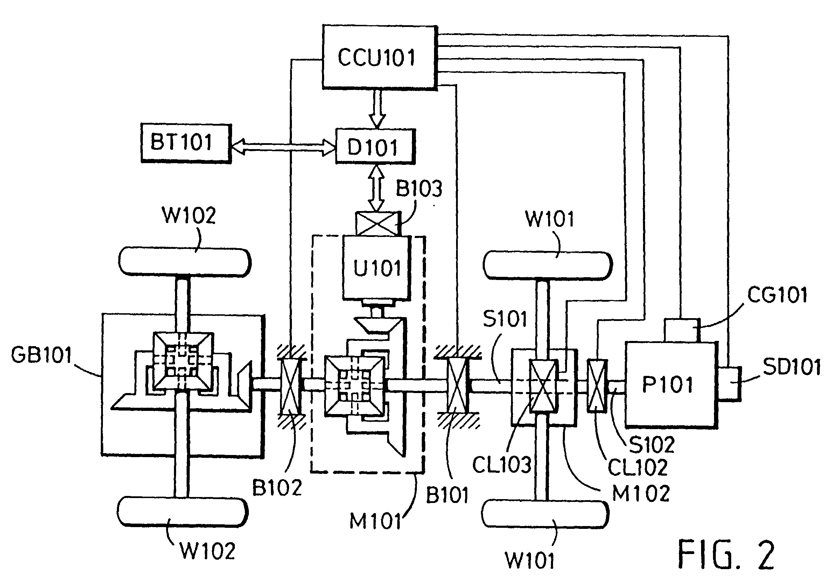

Figure 2 is the first application system of Figure 1: It discloses the application example of eliminating the clutch CL104, and the system functions are delineated in Table 2.

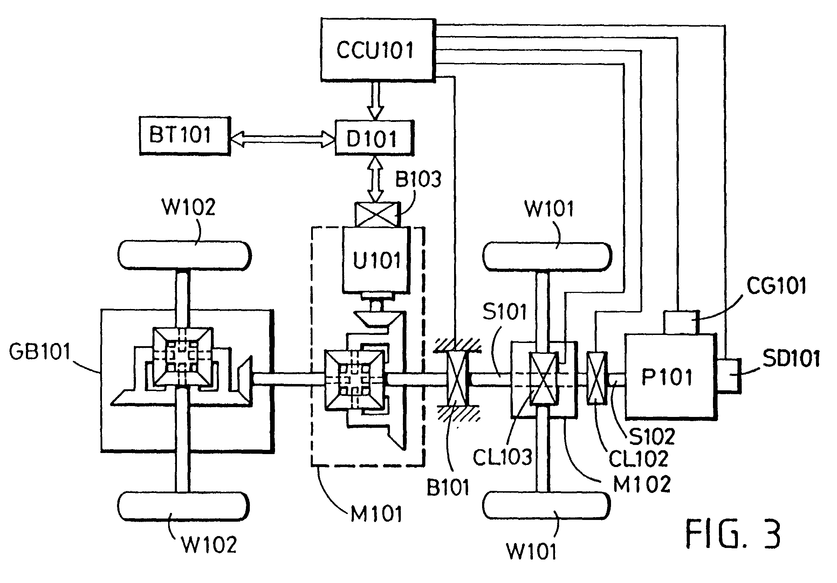

Figure 3 is the second application system of Figure 1: It discloses the application example of eliminating the clutch CL104 and the brake B102, and the system functions are delineated in Table 3.

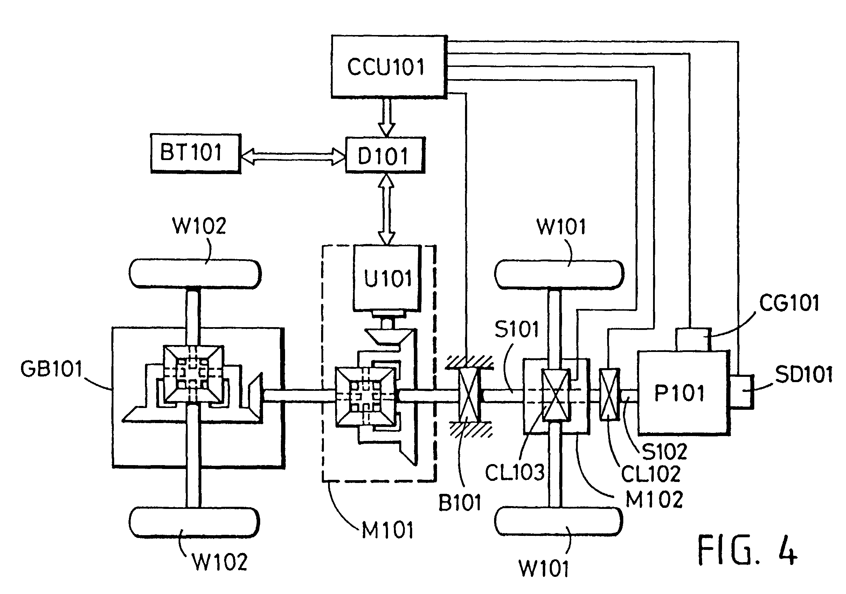

Figure 4 is the third application system of Figure 1: It discloses the application example of eliminating the B102, B103 and CL104, and the system functions are delineated in Table 4.

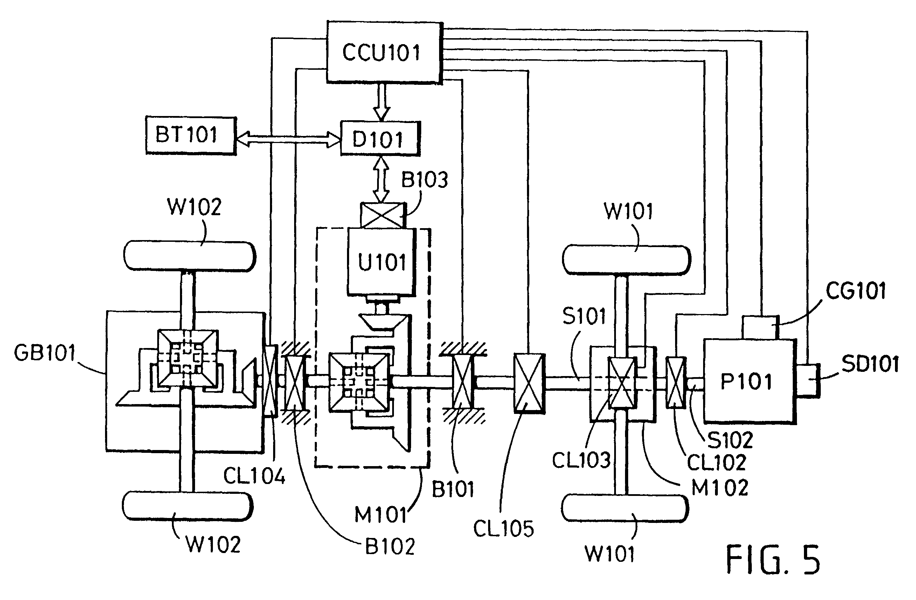

Figure 5 is the fourth application system of Figure 1: It discloses the application example of further installing the clutch CL105 between rear section output middle shaft and middle transmission device while the clutch CL103 for controlling the front section load is reserved (or the said clutch is replaced by the speed change shift of the middle transmission device) , and the system functions are delineated in Table 5, wherein besides of the functions delineated in Table 1, the additional functions are described as follows:
   **F11:** The engine is used to drive the front section load, and the electrical machine U101 is powered by the battery to drive the rear section load, and both are independently operated to drive the respective loads, wherein the brake B101 is at ON state, while the B102 and B103 are at OFF state, and the clutch CL105 is at OFF state, while the CL102, CL103 and CL104 are at ON state;
   F12: The engine is used to drive the front section load and the electrical machine U101 is pulled to be operated as a generator to charge the battery, wherein the brake B101 is at ON state, while the B102 and B103 are at OFF state, and the clutch CL105 is at OFF state, while the CL102, CL103 and CL104 are at ON state.

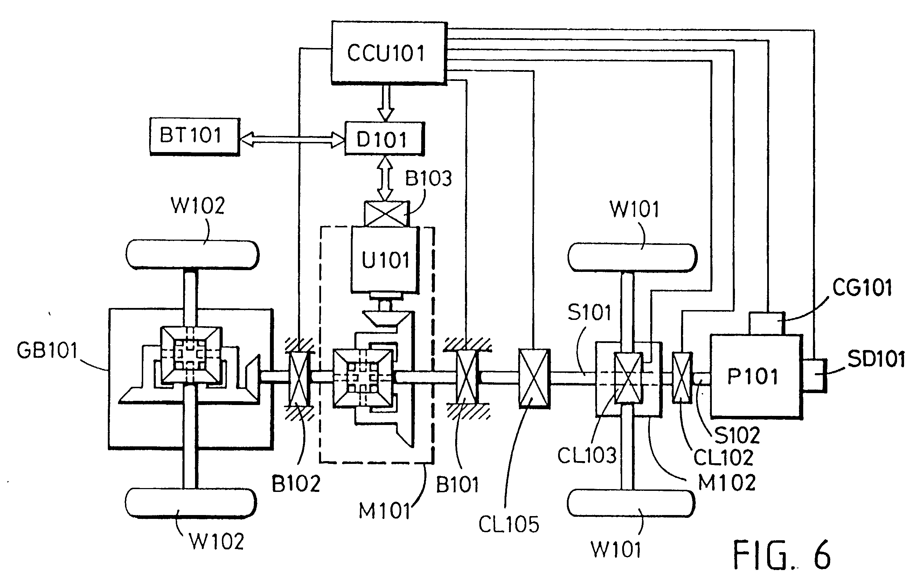

Figure 6 is the fifth application system of Figure 1: It discloses the application example of further installing the clutch CL105 between the rear section output middle shaft and the middle transmission device and eliminating the clutch CL104, and the system functions are delineated in Table 6.

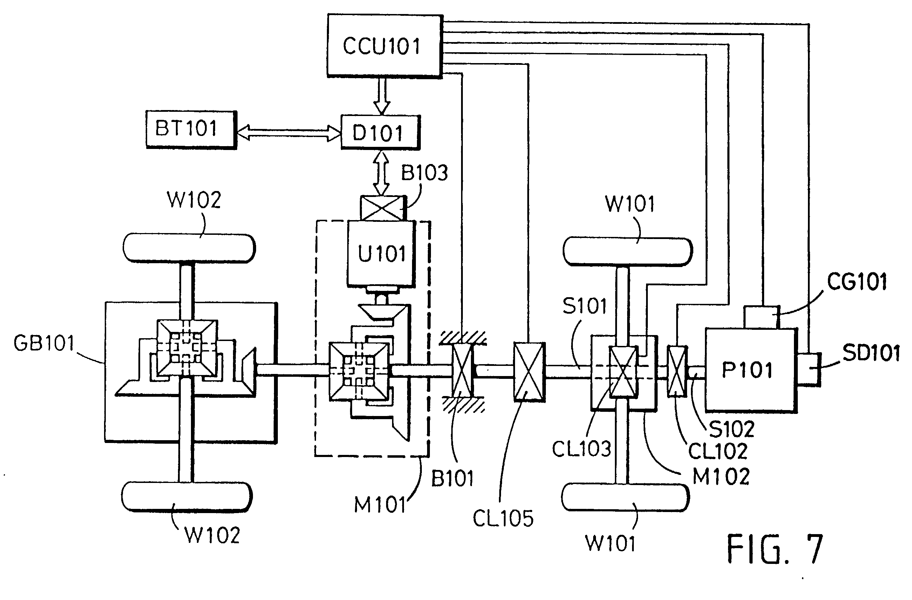

Figure 7 is the sixth application system of Figure 1: It discloses the application example of further installing the clutch CL105 between the rear section output middle shaft and the middle transmission device and eliminating the clutch CL104 and brake B102, and the system functions are delineated in Table 7.

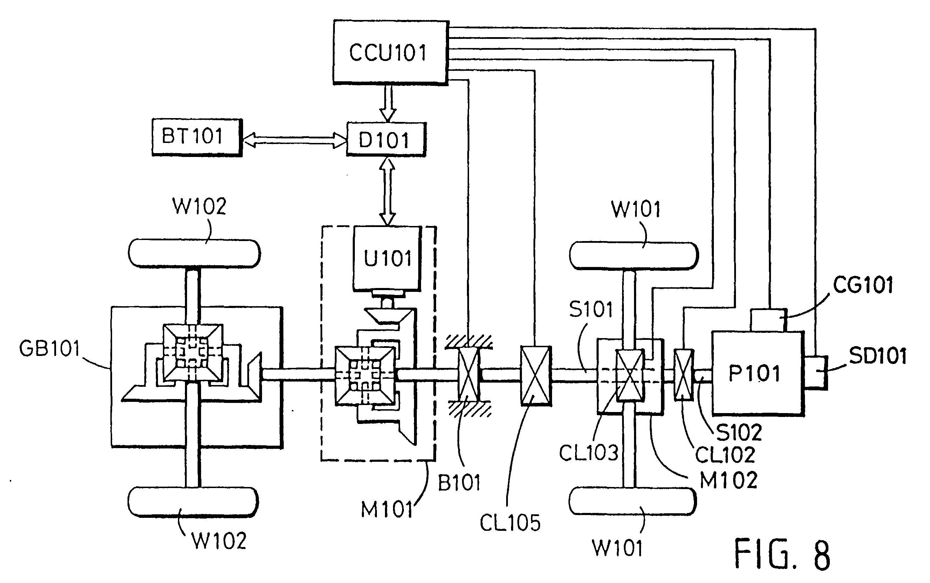

Figure 8 is the seventh application system of Figure 1: It discloses the application example of further installing the clutch CL105 and eliminating the clutch CL104 and brakes B102 and B103, and the system functions are delineated in Table 8.

The above described application examples are for reference only, wherein the practical applications can be achieved by rendering the front and the rear section loads constituted in a distributed differential mixing structure of the combined driving characteristics on the loads according to the performance requirements without changing the design of this invention to select the corresponding operating and control components.
- For the case when the systems of the embodying examples in Figure 1-8 are applied on the carriers, the angle displacement relationships between the front and rear section loads and the drive power source resulted from the transmission ratio and the wheel outside diameter differences include: The angle displacement speed of the two loads and the drive side rotational power source are operated according to the wheel system ratio relationships, or the angle displacement relationship between the two loads and their operations with the drive side rotational power source are not according to the wheel system ratio (such as slipping on the road surface), particularly, the relationships between the angle displacement of the rear section load and the drive side power source or between the front and rear section loads can be specially set not to operate according to the wheel system ratio relationship, but to operate through the differential acting adjustment by the electrical machine U101;
- The differential acting adjustment of the electrical machine U101 includes the active adjustment through input power to function as a motor or the passive adjustment through functioning as a generator to output power;
- In the carrier driving applications of the afore said front section load and the rear section load, the front section load can be the front wheel or the rear wheel, the rear section load can be the matched front wheel or rear wheel structure with the afore said definition;
- The distributed differential mixing combined power system has numerous operating functions in the section differential driving characteristic structure, therefore in the practical applications, it can be embodied to be comprised of all the functions or part of the functions.

As summarized from the above descriptions, the distributed differential mixing combined power system can be applied at vehicles, boats or utilized as other fixed combined driving power. The afore said embodying examples disclose the various application modes of the distributed differential mixing combined power system of the invention and in practical applications, the peripheral components for the output functions can be selected according to needs, thereby to flexibly select the required system.

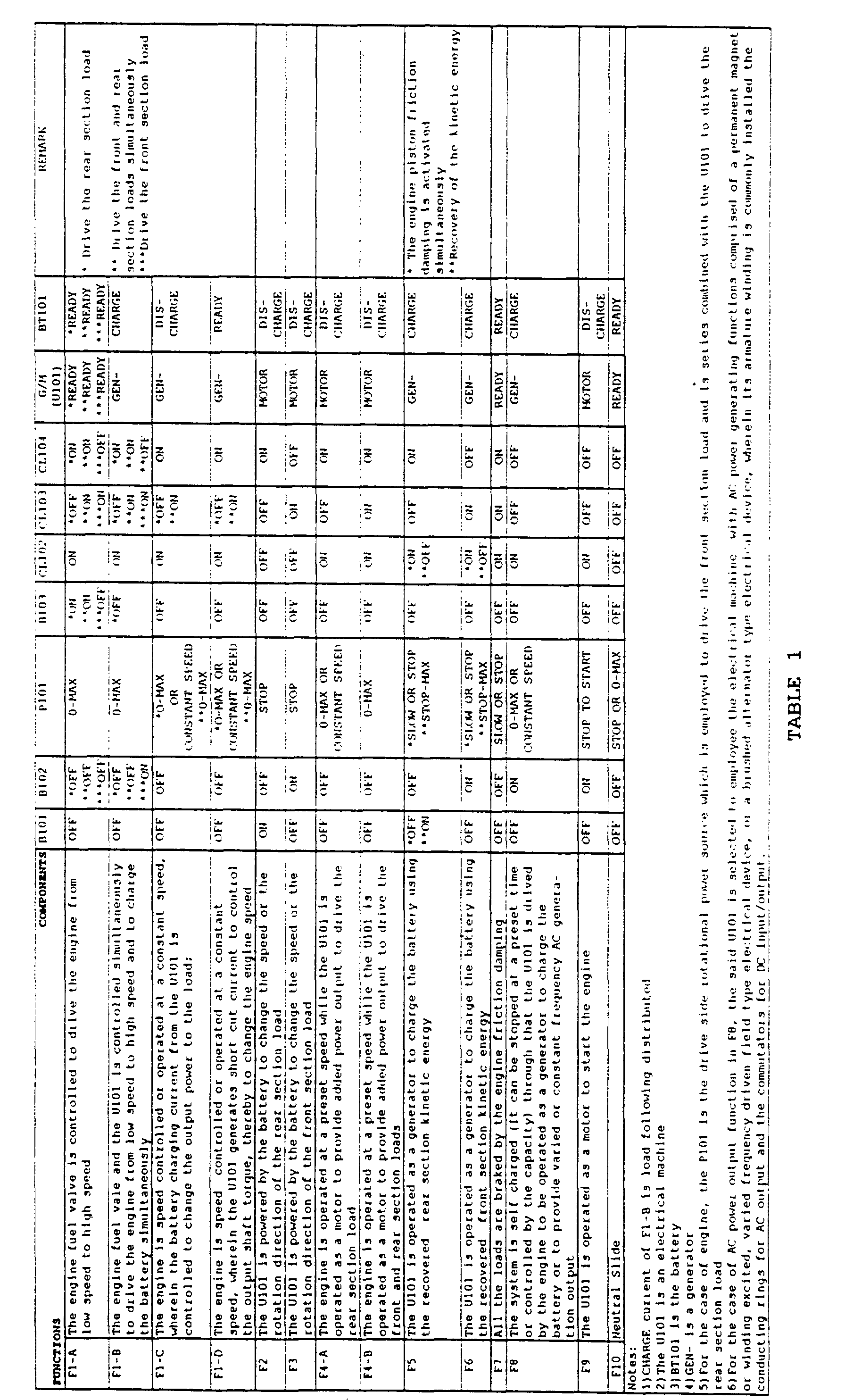

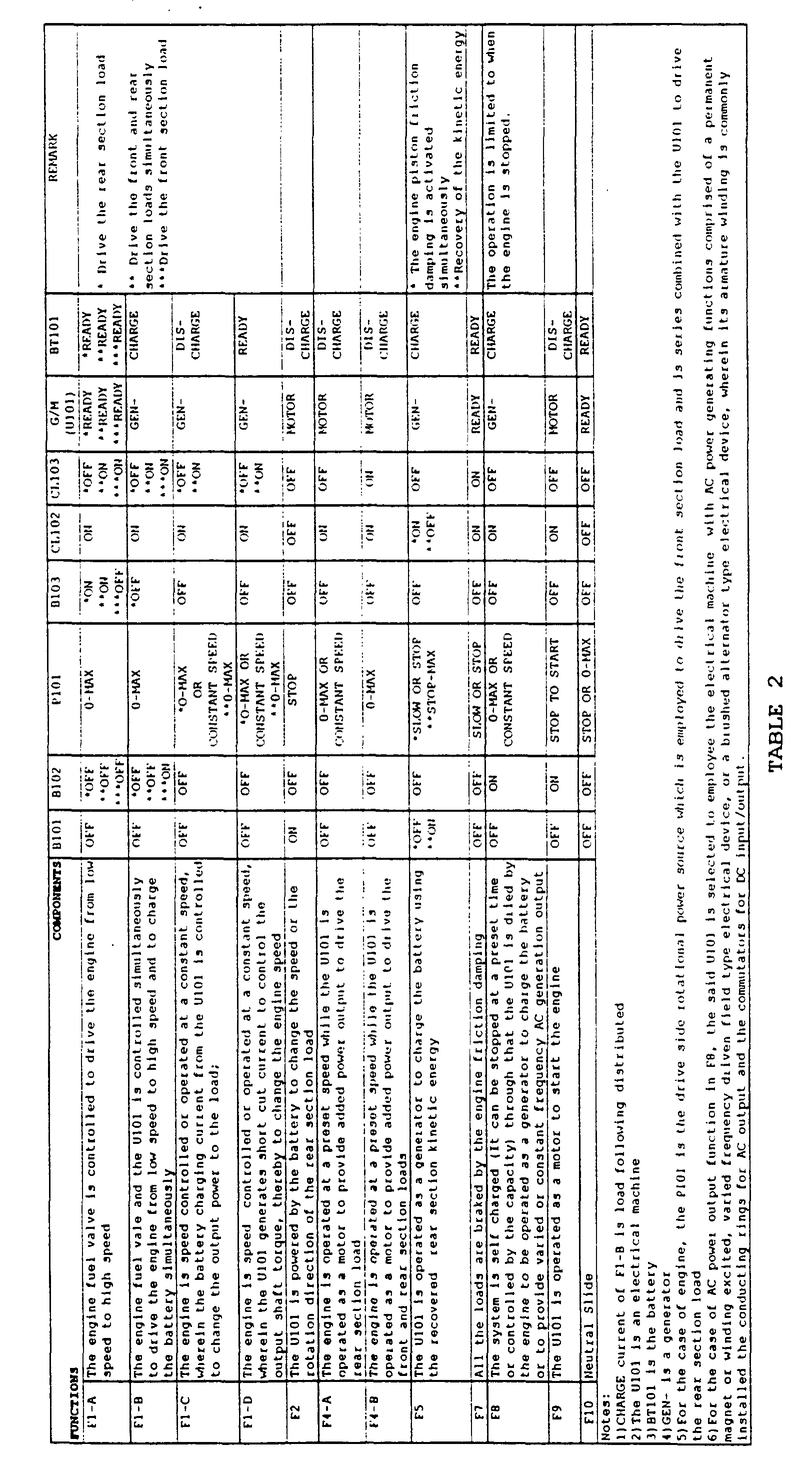

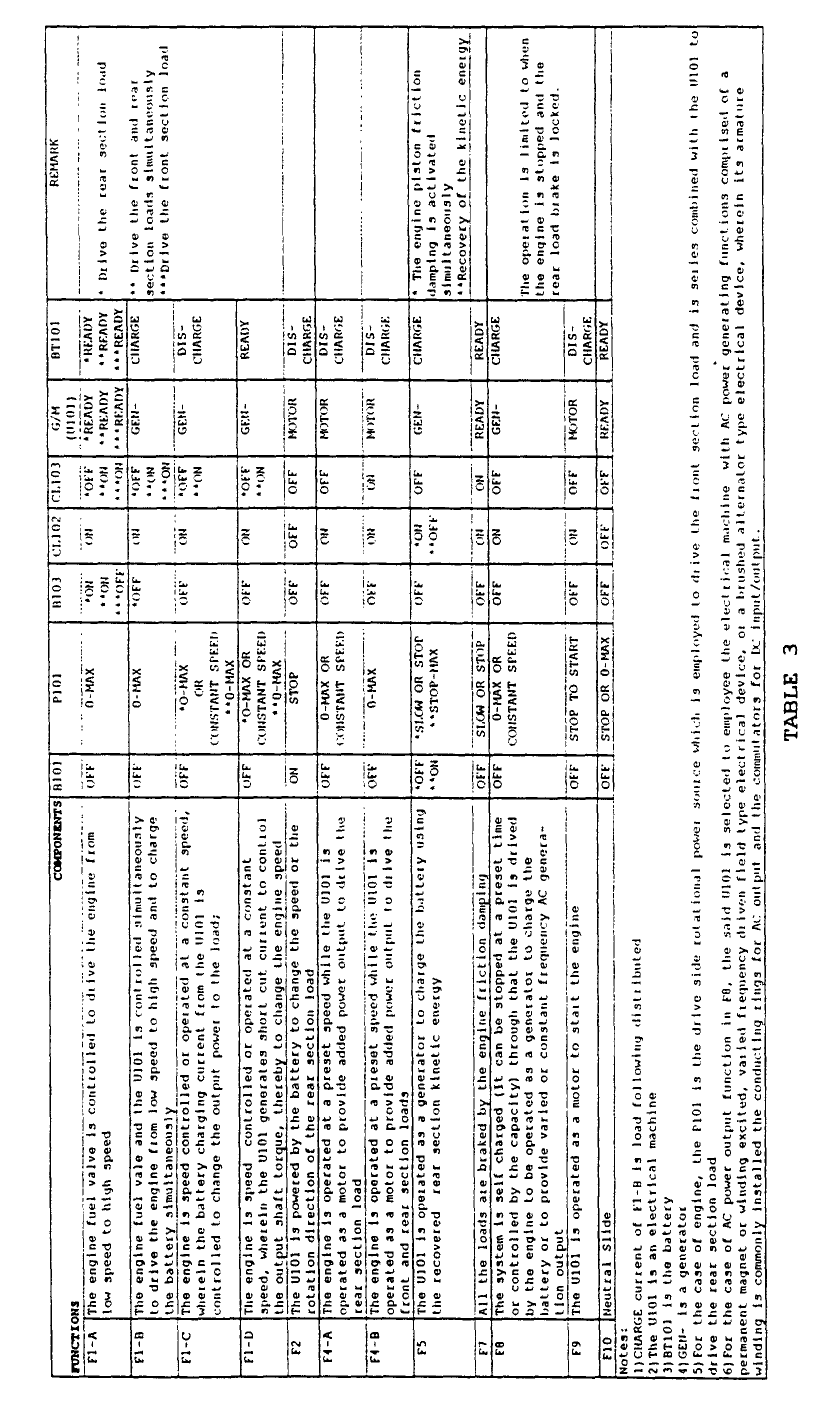

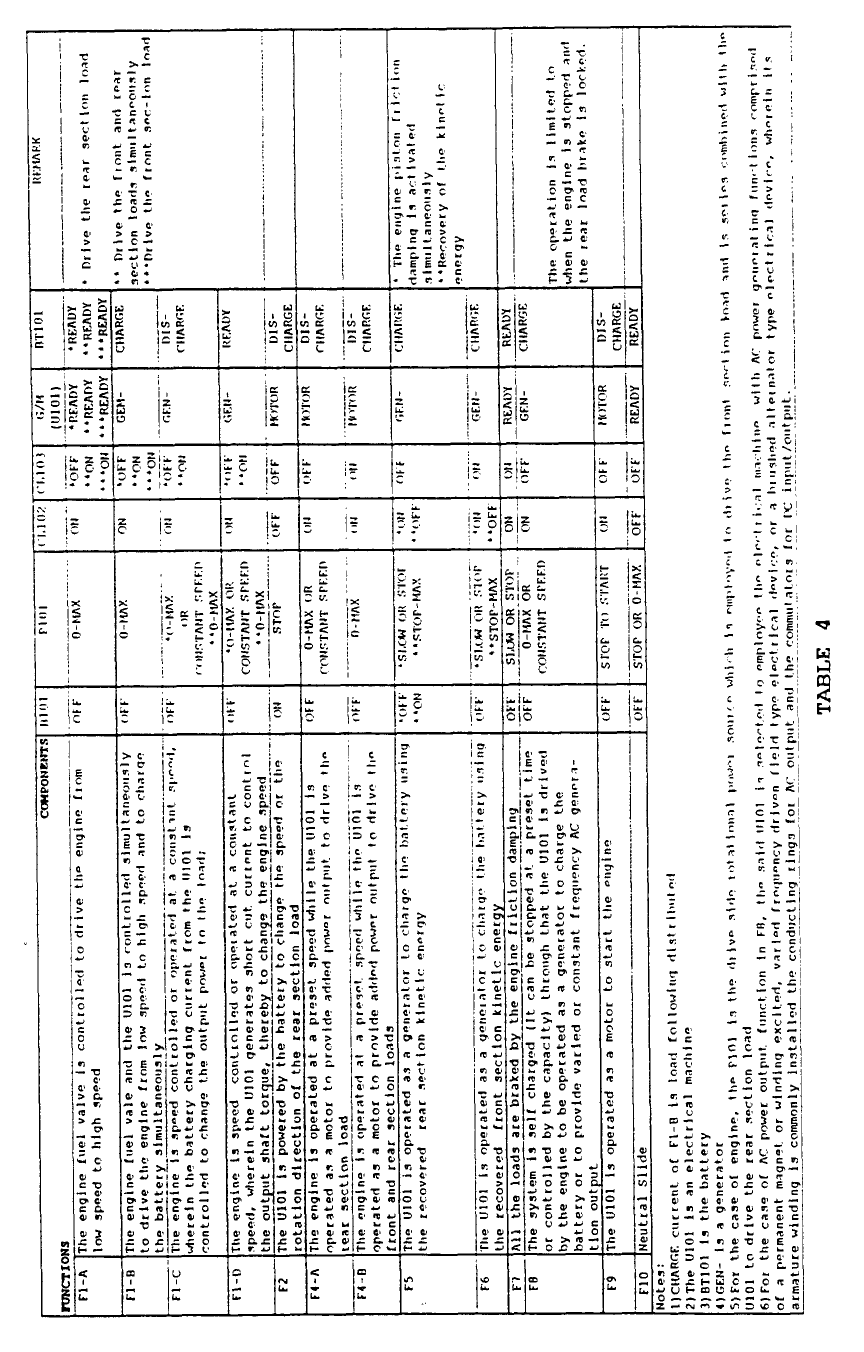

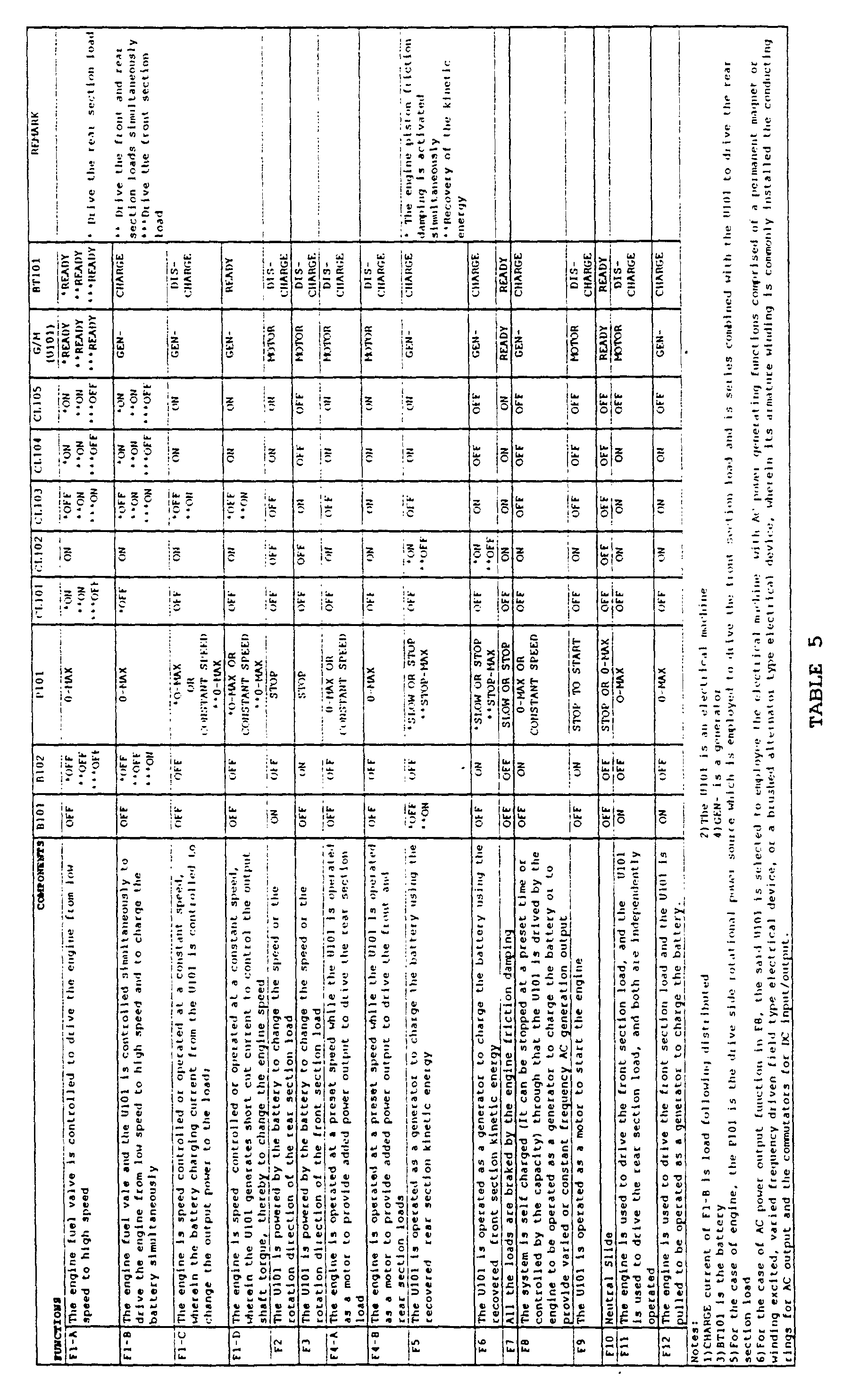

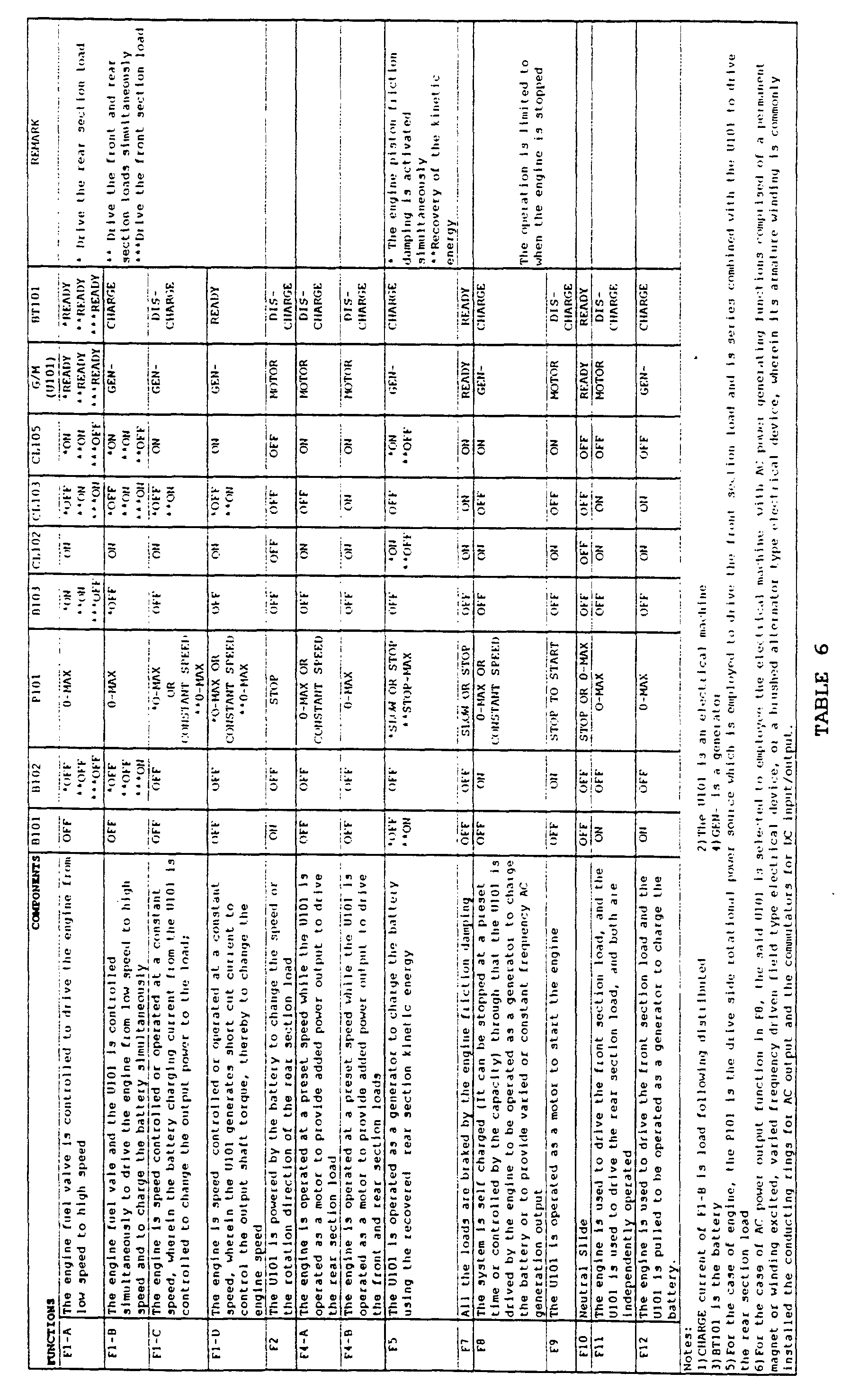

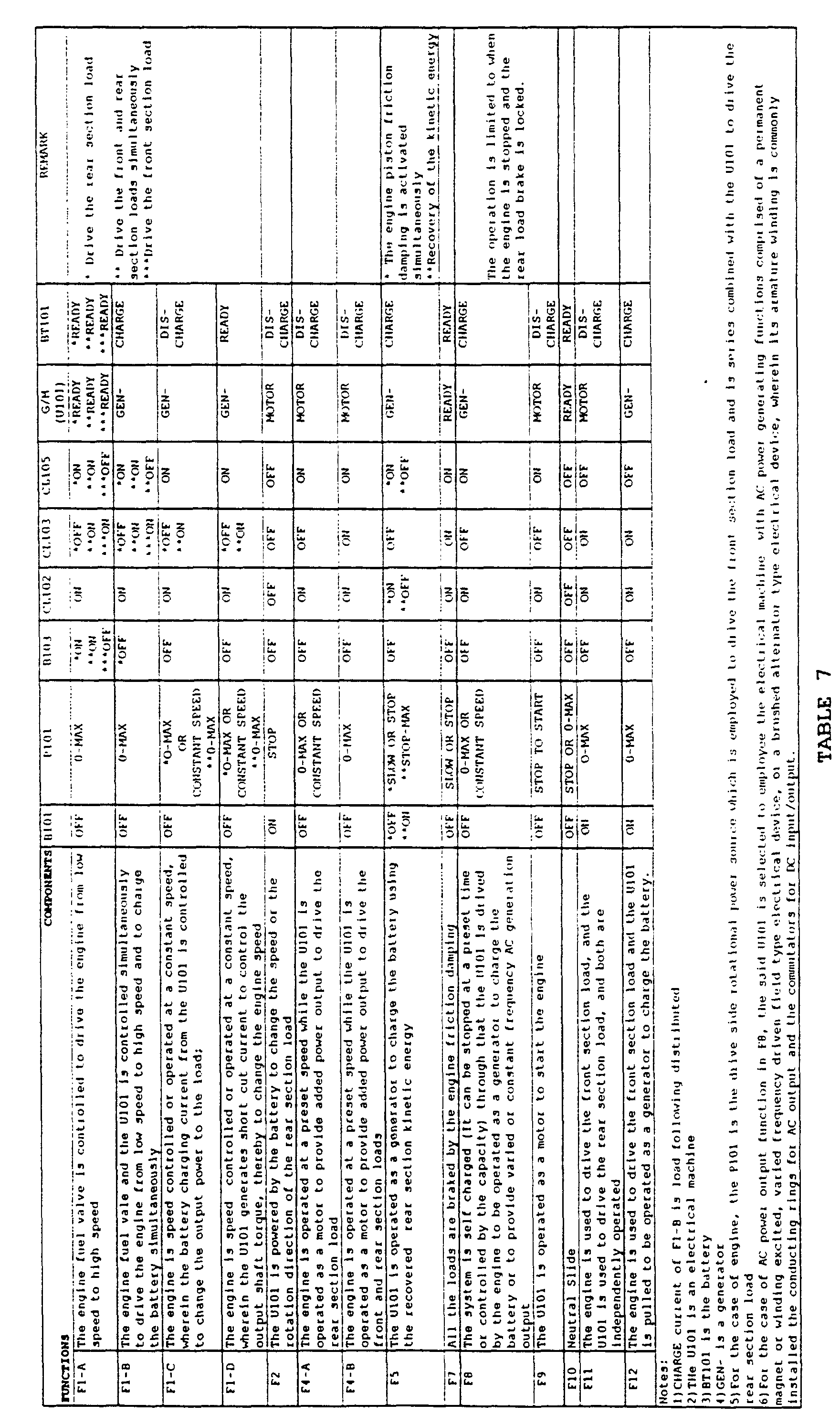

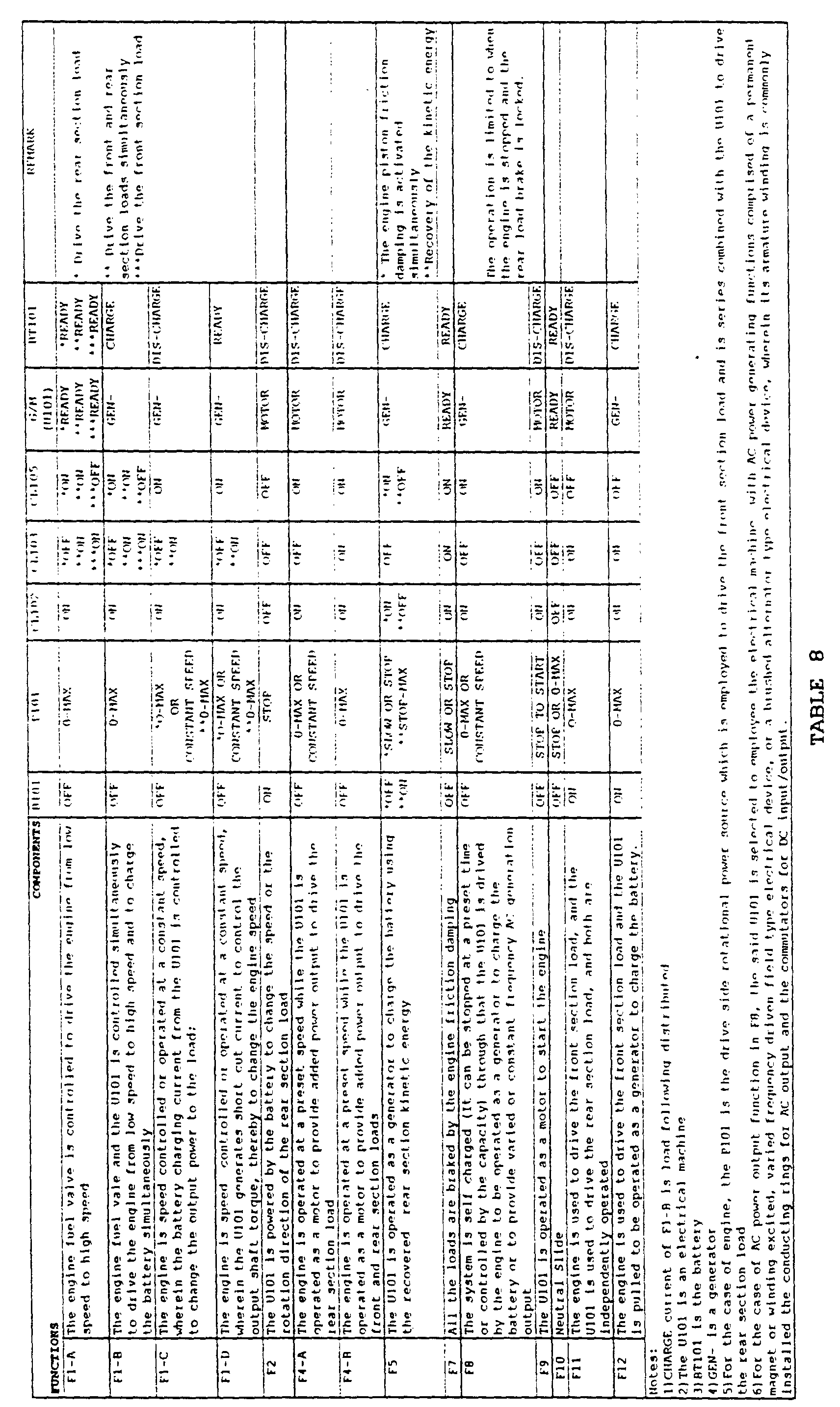

## Claims

1. A combined power distribution system for use in rotational driving applications comprising:
a rotational power source (P 101) having a rotational output shaft;
a front load (W101) with which the rotational output shaft (S102) is coupled via a clutch (CL103);
a rear load (W102) having two sides and a differential therebetween,
a mixing differential (M101) including an electrical machine (U101) having a rotor and a stator, a differential gear transmission system to which the rear load, the front load (W101) and the electrical machine are drivingly connected and a brake (B103) disposed between the rotor and the stator of the electrical machine (U101) and means (D101) for controlling the brake (B103), the electrical machine (U101) being operable to generate different motor driving functions when an input current is applied and the electric machine (U101) is employed as a motor, and to generate different generator functions through an output current when the electric machine (U101) is employed as a generator, the electric machine (U101) also being used as a power regeneration brake when the rotational power source (P101) is the main power source for the front and rear loads (W101,W102), the electric machine (U101) being connected to charge a battery (BT101) at which time a speed difference with the rear load (W102) can be adjusted by controlling the charging current,
wherein the output power of the rotational power source (P101) is directed to the mixing differential and can be driven at a constant speed and at a partially adjustable speed to improve the operating efficiency and decrease pollution, wherein one part of the output power being transformed through the mixing differential (M101) is used for driving the rear load while the remainder of the output power is converted through the generator function of the electrical machine (U101) of the mixing differential (M101) to charge the battery (BT101), **characterised in that** the mixing differential (M101) is disposed in the system separately from the rear load differential between the front and the rear loads (W101, W102).

2. A system as claimed in claim 1, further comprising a brake (B102) located between the differentially acting output shaft of the mixing differential (M101) and the rear load (W102).

3. A system as claimed in claim 2, further comprising a clutch (CL104) positioned between the brake (B 102) and the rear load (W102).

4. A system as claimed in any one of claims 1 to 3, further comprising a brake (B101) located between the mixing differential and the front load.

5. A system according to claim 4, further comprising a clutch (CL105) located between the mixing differential (M101) and the front load (W101).

6. A system as claimed in any one of claims 1 to 5, further comprising a clutch (CL102) located between the rotational power source (P101) and the front load (W101).

7. A system as claimed in any one of the preceding claims, wherein the front load (W101) includes a middle transmission device, a control interface (M102) and the clutch (CL103).

8. A system as claimed in any one of claims 1 to 7, wherein the electrical machine (U101) is arranged such that the rotational speed of its rotor is increased with a decreasing load on the rotor.

9. A system as claimed in any one of claims 1 to 8, wherein the electrical machine (U101) is arranged to be controlled by the drive circuit (D101) to provide additional torque on a driven load.

10. A system as claimed in any one of claims 1 to 9, further comprising a central controller (CCU101) for controlling the brake (B103).

11. A system according to claim 10, wherein the central controller (CCU101) includes means for causing the system to carry out the following functions:
controlling the engine fuel valve to drive the rotational power source (P101) from low speed to high speed;
controlling the engine fuel valve and the electrical machine (U101) simultaneously to drive the rotational power source (P101) from low speed to high speed and to charge the battery (BT101) simultaneously;
changing a speed of the rotational power source (P101) by causing the electrical machine (U101) to generate a current;
causing the electrical machine (U101) to be powered by the battery (BT101) to change the speed of the rear load;
powering the electrical machine (U101) by the battery (BT101) to change the speed of the front load;
operating the rotational power source (P101) at a preset speed while the electrical machine (U101) is operated as a motor to provide additional power for driving the rear load;
operating the electrical machine (U101) as a generator to charge the battery (BT101) using kinetic energy recovered from the rear load;
operating the electrical machine (U101) as a generator to charge the battery (BT101) using kinetic energy recovered from the front load;
causing all loads to be braked by engine friction damping; and
causing the electrical machine (U101) to be driven by the rotational power source (P101) to function as generator for charging the battery (BT101) and. to provide an electrical output to any additional loads connected thereto.

12. A system as claimed in claim 10, wherein the central controller (CCU101) includes means for causing the system to carry out the following functions:
controlling the engine fuel valve to drive the rotational power source (P101) from low speed to high speed;
controlling the engine fuel valve and the electrical machine (U101) simultaneously to drive the rotational power source (P101) from low speed to high speed and to charge the battery (BT101) simultaneously;
changing the speed of the rotational power source (P101) by causing the electrical machine to generate a current;
causing the electrical machine (U101) to be powered by the battery to change the speed of the rear load;
causing the electrical machine (U101) to be powered by the battery (BT101) to change the speed of the front load;
operating the rotational power source (P101) at a preset speed while the electrical machine is operated as a motor to provide additional power for driving the rear load;
operating the electrical machine (U101) as a generator to charge the battery using kinetic energy recovered from the rear load;
operating the rotational power source (P101) as a generator to charge the battery using kinetic energy recovered from the front load;
causing all loads to be braked by engine friction damping;
causing the electrical machine to be driven by the engine to function as generator for charging the battery and to provide an electrical output to any additional loads connected thereto;
operating the engine to drive the front load and independently operating the electrical machine to drive the rear load; and
operating the engine to drive the front load and causing the engine to also drive the electrical machine to charge the battery.

13. A system as claimed in any one of claims 1 to 12, wherein the front and rear loads include wheels and relationships between the front and rear loads is set not to operate according to the wheel system ratio relationship, but to operate through a differentially acting adjustment by the electrical machine (U101).

14. A system as claimed in claim 13, wherein the differentially acting adjustment of the electrical machine (U101) includes an active adjustment of the input power when the electrical machine functions as a motor and a passive adjustment of the output power when the electrical machine functions as a generator.

15. A system as claimed in any one of the preceding claims, wherein the front load is one of front and rear sets of wheels of a vehicle, and the rear load is the other of the front and rear sets of wheels.

16. A system as claimed in any one of the preceding claims, wherein said transmission gear system includes two differential output shafts and an input shaft coupled with the electrical device through a transmission gear, the two wheel shafts of the differential gears being respectively coupled with a transmission middle shaft driven by the rotational power source and with the input shaft of rear differential gear box through a clutch to drive the two-side differentially acting rear section load.

17. The system according to any one of the preceding claims, wherein the system is a four-wheel drive system for a vehicle.

18. The system according to any one of the preceding claims, wherein the electrical machine (U101) is arranged so as to be usable to start the rotational power source (P101).

## Patentansprüche

1. Kombiniertes Leistungsverteilsystem zum Einsatz in Rotations-Antriebsanwendungen, mit:
einer Rotations-Leistungsquelle (P101) mit einer rotierenden Ausgangswelle;
einer hinteren Last (W102) mit zwei Seiten und einem Differential zwischen ihnen;
einem Mischdifferential (M101) mit einer elektrischen Maschine (U101) mit einem Rotor und einem Stator, einem Differentialgetriebe, mit dem die hintere Last, die vordere Last (W101) und die elektrische Maschine antrieblich verbunden sind, einer Bremse (B103) zwischen dem Rotor und dem Stator der elektrischen Maschine (U101) sowie einer Einrichtung (D101) zum Steuern der Bremse (B103), wobei die elektrische Maschine (U101) unterschiedliche Motorantriebsfunktionen erzeugen kann, wenn ein Eingangsstrom angelegt wird und die Maschine (U101) als Motor verwendet wird, und unterschiedliche Generatorfunktionen über einen Ausgangsstrom erzeugen kann, wenn die elektrische Maschine (U101) als Generator verwendet wird, wobei die elektrische Maschine (U101) auch als Leistungsrückgewinnungsbremse verwendet wird, wenn die Rotations-Leistungsquelle (P101) die Hauptleistungsquelle für die vordere und die hintere Last (W101, W102) ist, und wobei die elektrische Maschine (U101) mit einer Batterie (BT101) verbunden ist und sie lädt, zu welcher Zeit eine Drehzahldifferenz zur hinteren Last (W102) durch Steuern des Ladestroms einstellbar ist, und
wobei die Ausgangsleistung der Rotations-Leistungsquelle (P101) zum Mischdifferential gerichtet wird und sich mit konstanter und mit teilweise einstellbarer Drehzahl antreiben lässt, um den Arbeitswirkungsgrad zu erhöhen und die Umweltverschmutzung zu verringern, und wobei ein über das Mischdifferential (M101) transformierter Teil der Ausgangsleistung zum Antrieb der hinteren Last genutzt wird, während der Rest der Ausgangsleistung über die Generatorfunktion der elektrischen Maschine (U101) des Mischdifferentials (M101) zum Laden der Batterie (BT101) umgewandelt wird, **dadurch gekennzeichnet dass** das Mischdifferential (M101) im System separat vom hinteren Lastdifferential zwischen der vorderen und der hinteren Last (W101, W102) angeordnet ist.

2. System nach Anspruch 1 weiterhin mit einer Bremse (B102) zwischen der differentiell wirkenden Ausgangswelle des Mischdifferentials (M101) und der hinteren Last (W102).

3. System nach Anspruch 2 weiterhin mit einer Kupplung (CL104) zwischen der Bremse (B102) und der hinteren Last (W102).

4. System nach einem der Ansprüche 1 bis 3 weiterhin mit eine Bremse (B101) zwischen dem Mischdifferential und der vorderen Last.

5. System nach Anspruch 4 weiterhin mit einer Kupplung (CL105) zwischen dem Mischdifferential (M101) und der vorderen Last (W101).

6. System nach einem der Ansprüche 1 bis 5 weiterhin mit einer Kupplung (CL102) zwischen der Rotations-Leistungsquelle (P101) und der vorderen Last (W101).

7. System nach einem der vorgehenden Ansprüche, bei dem die vordere Last (W101) eine mittige Getriebeeinrichtung, eine Steuerschnittstelle (M102) und die Kupplung (CL103) aufweist.

8. System nach einem der Ansprüche 1 bis 7, bei dem die elektrische Maschine (U101) so eingerichtet ist, dass die Drehzahl ihres Rotors mit abnehmender Last am Rotor steigt.

9. System nach einem der Ansprüche 1 bis 8, bei dem die elektrische Maschine (U101) so eingerichtet ist, dass sie von der Ansteuerschaltung (D101) steuerbar ist, um einer angetriebenen Last zusätzliches Drehmoment zu liefern.

10. System nach einem der Ansprüche 1 bis 9 weiterhin mit einem zentralen Controller (CCU101) zum Steuern der Bremse (B103).

11. System nach Anspruch 10, bei dem der zentrale Controller (CCU101) Einrichtungen aufweist, die bewirken, dass mit dem System folgende Funktionen ausführbar sind:
Ansteuern des Motorkraftstoffventils derart, dass die Rotations-Leistungsquelle (P101) von einer niedrigen zu einer hohen Drehzahl hin angetrieben wird;
gleichzeitiges Ansteuern des Motorkraftstoffventils und der elektrischen Maschine (U101) derart, dass die Rotations-Leistungsquelle (P101) von einer niedrigen zu einer hohen Drehzahl hin angetrieben und gleichzeitig die Batterie (BT101) geladen wird;
Ändern einer Drehzahl der Rotations-Leistungsquelle (P101), indem man die elektrische Maschine (U101) einen Strom erzeugen lässt;
Speisen der elektrischen Maschine (U101) aus der Batterie (BT101), um die Drehzahl der hinteren Last zu ändern;
Speisen der elektrischen Maschine (U101) aus der Batterie (BT101), um die Drehzahl der vorderen Last zu ändern;
Betreiben der Rotations-Leistungsquelle (P101) mit voreingestellter Drehzahl, während die elektrische Maschine (U101) als Motor arbeitet, um zusätzliche Leistung zum Antrieb der hinteren Last zu liefern;
Betreiben der elektrischen Maschine (U101) als Generator, um unter Nutzung von an der hinteren Last rückgewonnener kinetischer Energie die Batterie (BT101) zu laden;
Betreiben der elektrischen Maschine (101) als Generator, um unter Nutzung von an der vorderen Last rückgewonnener kinetischer Energie die Batterie (BT101) zu laden;
Abbremsen aller Lasten durch Motor-Reibungsdämpfung; und
Antreiben der elektrischen Maschine (U101) durch die Rotations-Leistungsquelle (P101) derart, dass erstere als Generator zum Laden der Batterie (BT101) arbeitet und an diese angeschlossene zusätzliche Lasten speist.

12. System nach Anspruch 10, bei dem der zentrale Controller (CCU101) Einrichtungen aufweist, mit denen bewirkbar ist, dass das System folgende Funktionen ausführt;
Ansteuern des Motor-Kraftstoffventils derart, dass die Rotations-Leistungsquelle (P101) von niedriger zu hoher Drehzahl hin steigt;
gleichzeitiges Ansteuern des Motor-Kraftstoffventils und der elektrischen Maschine (U101) derart, dass die Rotations-Leistungsquelle (P101) von niedriger zu hoher Drehzahl hin steigt und gleichzeitig die Batterie (BT101) geladen wird;
Ändern der Drehzahl der Rotations-Leistungsquelle (P101), indem man die elektrische Maschine einen Strom erzeugen lässt;
Speisen der elektrischen Maschine (U101) aus der Batterie (BT101), um die Drehzahl der hinteren Last zu ändern;
Speisen der elektrischen Maschine (U101) aus der Batterie (BT101), um die Drehzahl der vorderen Last zu ändern;
Betreiben der Rotations-Leistungsquelle (P101) mit voreingestellter Drehzahl, während die elektrische Maschine als Motor betrieben wird, um zusätzliche Leistung zum Antrieb der hinteren Last zu liefern;
Betreiben der elektrischen Maschine (U101) als Generator, um unter Nutzung von an der hinteren Last rückgewonnener kinetischer Energie die Batterie zu laden;
Betreiben der Rotationsleistungsquelle (P101) als Generator, um unter Nutzung von an der vorderen Last rückgewonnener kinetischer Energie die Batterie zu laden;
Abbremsen aller Lasten durch Motor-Reibungsdämpfung;
Antreiben der elektrischen Maschine als Generator zum Laden der Batterie und Abgabe elektrischer Ausgangsleistung an an letztere angeschlossene zusätzliche Lasten;
Betreiben des Motors zum Antrieb der vorderen Last und unabhängiges Betreiben der elektrischen Maschine zum Antrieb der hinteren Last; und
Betreiben des Motors zum Antrieb der vorderen Last und auch der elektrischen Maschine zum Laden der Batterie.

13. System nach einem der Ansprüche 1 bis 12, bei dem die vordere und die hintere Last Räder aufweisen und der Zusammenhang zwischen der vorderen und der hinteren Last nicht auf einen Betrieb nach der Verhältrdsbeziehung des Radsystems, sondern auf einen Betrieb über eine differentiell wirkende Einstellung durch die elektrische Maschine (U101) eingerichtet ist.

14. System nach Anspruch 13, bei dem die differentiell wirkende Einstellung der elektrischen Maschine (U101) eine aktive Einstellung der Eingangsleistung, wenn die elektrische Maschine als Motor arbeitet, und eine passive Einstellung der Ausgangsleistung beinhaltet, wenn die elektrische Maschine als Generator arbeitet.

15. System nach einem der vorgehenden Ansprüchen, bei dem die vordere Last der vordere oder der hintere Radsatz eines Fahrzeugs und die hintere Last der jeweils andere Radsatz ist.

16. System nach einem der vorgehenden Ansprüche, bei dem das Übertragungsgetriebe zwei differentielle Ausgangswellen und eine Eingangswelle aufweist, die mit der elektrischen Einrichtung über ein Zahnradgetriebe gekoppelt ist, wobei die beiden Radwellen der Differentialgetriebe mit einer von der Rotations-Leistungsquelle angetriebenen mittigen Getriebewelle und mit der Eingangswelle des hinteren Differentialgetriebes über eine Kupplung gekoppelt sind, um die zweiseitige, differentiell wirkende hintere Last anzutreiben.

17. System nach einem der vorgehenden Ansprüche, bei dem das System ein Vierradantrieb für ein Fahrzeug ist.

18. System nach einem der vorgehenden Ansprüche, bei dem die elektrische Maschine (U101) für den Einsatz zum Anlassen der Rotations-Leistungsquelle (P101) eingerichtet ist.

## Revendications

1. Système de distribution électrique combiné à utiliser dans les applications de commande rotationnelles comprenant :
une source de puissance rotationnelle (P101) ayant un arbre rotationnel de sortie;
une charge avant (W101) avec laquelle l'arbre principal rotationnel (S102) est couplé via un embrayage (CL103) ;
une charge arrière (W102) ayant deux côtés et un différentiel entre eux
un différentiel de mélange (M101) comprenant une machine électrique (U101) ayant un rotor et un stator, un système de transmission par engrenage différentiel auquel la charge arrière, la charge avant (W101) et la machine électrique sont raccordées par entraînement et un frein (B103) disposé entre le rotor et le stator de la machine électrique (U101) et des moyens (D101) pour contrôler le frein (B103), la machine électrique (U101) pouvant être utilisé pour générer différentes fonctions de commande du moteur quand un courant d'entrée est appliqué et que la machine électrique (U101) est utilisée comme moteur, et pour générer différentes fonctions de générateur à travers un courant de sortie quand la machine électrique (U101) est utilisée comme un générateur, la machine électrique (U101) étant également utilisée comme un frein de régénération électrique quand la source électrique rotationnelle (P101) est la principale source d'électricité pour les charges avant et arrière (W101, W102), la machine électrique (U101) étant raccordée pour charger une batterie (BT101) au moment où une différence de vitesse avec la charge arrière (W102) peut être ajustée en contrôlant le courant de charge,
dans lequel la puissance de sortie de la source électrique rotationnelle ((P101) est dirigée vers le différentiel de mélange et peut être commandée à une vitesse constante et à une vitesse partiellement réglable, afin d'améliorer l'efficacité de fonctionnement et diminuer la pollution, et dans lequel une partie de la puissance de sortie transformée à travers le différentiel de mélange (M101) est utilisée pour commander la charge arrière tandis que le reste de la puissance de sortie est convertie à travers la fonction du générateur de la machine électrique (U101) du différentiel de mélange (M101) pour charger la batterie (BT101), **caractérisée en ce que** le différentiel de mélange (M101) est disposé dans le système séparément du différentiel de charge arrière entre les charges avant et arrière (W101, W102).

2. Système selon la revendication 1, comprenant en outre un frein (B102) situé entre l'arbre de sortie du différentiel de mélange (M101) agissant de manière différentielle et la charge arrière (W102).

3. Système selon la revendication 2, comprenant en outre un embrayage (CL104) positionné entre le frein (B102) et la charge arrière (W102)

4. Système selon l'une quelconque des revendications 1 à 3, comprenant en outre un frein (B101) situé entre le différentiel de mélange et la charge avant.

5. Système selon la revendication 4, comprenant en outre un embrayage (CL105) situé entre le différentiel de mélange (M101) et la charge avant (W101)

6. Système selon l'une quelconque des revendications 1 à 5, comprenant en outre un embrayage (CL102) situé entre la source électrique rotationnelle (P101) et la charge avant (W101).

7. Système selon l'une quelconque des revendications précédentes, dans lequel la charge avant (W101) comprend un dispositif de transmission central, une interface de commande (M102) et l'embrayage (CL103).

8. Système selon l'une quelconque des revendications 1 à 7, dans lequel la machine électrique (U101) est disposée de sorte que la vitesse de rotation de son rotor soit accrue en cas de diminution de la charge sur le rotor.

9. Système selon l'une quelconque des revendications 1 à 8, dans lequel la machine électrique (U101) est disposée de façon à être contrôlée par le circuit de commande (D101) pour donner un couple supplémentaire sur une charge menée.

10. Système selon l'une quelconque des revendications 1 à 9, comprenant en outre un contrôleur central (CCU101) pour contrôler le frein (B103).

11. Système selon la revendication 10, dans lequel le contrôleur central (CCU101) comprend des moyens permettant au système d'exercer les fonctions suivantes :
contrôler la soupape de carburant moteur pour commander la source électrique rotationnelle (P101) de basse vitesse à vitesse élevée :
contrôler la soupape de carburant moteur et la machine électrique (U101) simultanément pour commander la source électrique rotationnelle (P101) de basse vitesse à vitesse élevée et pour charger la batterie (BT101) simultanément ;
modifier la vitesse de la source électrique rotationnelle (P101) en permettant à la machine électrique (U101) de générer un courant ;
permettre à la machine électrique (U101) d'être alimentée par la batterie (BT101) pour modifier la vitesse de la charge arrière ;
permettre à la machine électrique (U101) d'être alimentée par la batterie (BT101) pour modifier la vitesse de la charge avant ;
faire fonctionner la source électrique rotationnelle (P101) à une vitesse préétablie pendant que la machine électrique (U101) fonctionne comme un moteur pour fournir une alimentation additionnelle afin de commander la charge arrière ;
faire fonctionner la machine électrique (U101) comme un générateur pour charger la batterie (BT101) en utilisant l'énergie cinétique récupérée de la charge arrière ;
faire fonctionner la machine électrique (U101) comme un générateur pour charger la batterie (BT101) en utilisant l'énergie cinétique récupérée de la charge avant ;
faire freiner toutes les charges grâce à un amortissement de la friction moteur et
faire fonctionner la machine électrique (U101) à commander par une source électrique rotationnelle (P101) comme un générateur pour charger la batterie (BT101) et fournir une sortie électrique aux charges supplémentaires qui y sont reliées.

12. Système selon la revendication 10, dans lequel le contrôleur central (CCU101) comprend des moyens permettant au système d'exercer les fonctions suivantes :
contrôler la soupape de carburant moteur pour commander la source électrique rotationnelle (P101) de basse vitesse à vitesse élevée :
contrôler la soupape de carburant moteur et la machine électrique (U101) simultanément pour commander la source électrique rotationnelle (P101) de basse vitesse à vitesse élevée et pour charger la batterie (BT101) simultanément ;
modifier la vitesse de la source électrique rotationnelle (P101) en permettant à la machine électrique de générer un courant ;
permettre à la machine électrique (U101) d'être alimentée par la batterie pour modifier la vitesse de la charge arrière ;
permettre à la machine électrique (U101) d'être alimentée par la batterie (BT101) pour modifier la vitesse de la charge avant ;
faire fonctionner la source électrique rotationnelle (P101) à une vitesse préétablie pendant que la machine électrique fonctionne comme un moteur pour fournir une alimentation additionnelle afin de commander la charge arrière ;
faire fonctionner la machine électrique (U101) comme un générateur pour charger la batterie en utilisant l'énergie cinétique récupérée de la charge arrière ;
faire fonctionner la machine électrique (U101) comme un générateur pour charger la batterie en utilisant l'énergie cinétique récupérée de la charge avant ;
faire freiner toutes les charges grâce à un amortissement de la friction moteur ;
faire fonctionner la machine électrique à commander par une source électrique rotationnelle comme un générateur pour charger la batterie et fournir une sortie électrique aux charges supplémentaires qui y sont reliées ;
faire fonctionner le moteur pour commander la charge avant et indépendamment faire fonctionner la machine électrique pour commander la charge arrière ; et
faire fonctionner le moteur pour commander la charge avant et permettre au moteur de commander également la machine électrique pour charger la batterie.

13. Système selon l'une quelconque des revendications 1 à 12, dans lequel les charges avant et arrière comprennent des roues et des relations entre les charges avant et arrière sont établies de façon à ne pas fonctionner selon la relation du rapport du système de roue, mais pour fonctionner à travers un ajustement agissant de façon différentielle par l'intermédiaire de la machine électrique (U101).

14. Système selon la revendication 13, dans lequel l'ajustement agissant de façon différentielle de la machine électrique (U101) comprend un ajustement actif de la puissance d'entrée quand la machine électrique fonctionne comme un moteur et un ajustement passif de la puissance de sortie quand la machine électrique fonctionne comme un générateur.

15. Système selon l'une quelconque des revendications précédentes, dans lequel la charge avant est un des ensembles avant et arrière de roues d'un véhicule, et la charge arrière est l'autre ensemble avant et arrière de roues.

16. Système selon l'une quelconque des revendications précédentes, dans lequel ledit système à pignon de renvoi comprend deux arbres de sortie à différentiel et un arbre d'entrée couplé au dispositif électrique à travers un pignon de renvoi, les deux essieux des engrenages différentiels étant respectivement couplés à un arbre central de transmission commandé par la source électrique rotationnelle et à l'arbre d'entrée de la boîte du différentiel arrière à travers un embrayage pour commander la charge de section arrière agissant de façon différentielle des deux côtés.

17. Système selon l'une quelconque des revendications précédentes, dans lequel le système est un système à quatre roues motrices pour un véhicule.

18. Système selon l'une quelconque des revendications précédentes, dans lequel la machine électrique (U101) est disposée de façon à être utilisable pour faire démarrer la source électrique rotationnelle (P101).
